# EUROPEAN PATENT APPLICATION

(11) **EP 1 834 720 A1**
(43) Date of publication of application: **19.09.2007**
(21) Application number: 07104254.3
(22) Date of filing: 15.03.2007
(51) Int. Cl.: B23C 5/10

(54) **Milling cutter**

(30) Priority: 17.03.2006 US 378860
(71) Applicant: The General Electric Company, Schenectady NY 12345 (US)
(72) Inventor: Meece, Roy Dean, West Harrison, IN 47060 (US); Baird, Jr., James Allen, Amelia, OH 45102 (US)
(74) Representative: Illingworth-Law, William Illingworth

(57) **Abstract**

A milling cutter includes a milling-cutter body. The milling-cutter body includes a longitudinal axis, a proximal end portion, and a distal end portion (18). The distal end portion has a first cutting land (20), wherein the first cutting land, when viewed in a side elevational view, has an outline including a first substantially circular arc portion (22), a first substantially straight portion (24), a first transition zone (26) where the first substantially circular arc portion transitions to the first substantially straight portion, and a distal tip (28). The distal tip is located substantially on the longitudinal axis. The first substantially straight portion extends proximally from the distal tip to the first transition zone at an acute angle with respect to the longitudinal axis.

## Description

### BACKGROUND OF THE INVENTION

The present invention relates generally to milling of work pieces such as by machining centers or milling machines, and more particularly to a milling cutter.

Conventional milling cutters include a ball nose milling cutter having a longitudinal axis, a proximal end portion, and a distal end portion. The proximal end portion is adapted for application of a torque about the longitudinal axis. The distal end portion has four cutting lands separated by intervening flutes. The cutting lands of a first pair of diametrically opposed cutting lands, when viewed in a side elevational view, have a combined outline having a substantially hemispherical (semicircular) shape. The cutting lands of the other second pair of diametrically opposed cutting lands, when viewed in a side elevational view, each have a substantially forty-five degree circular arc portion, a substantially straight portion, and a transition point where the substantially forty-five degree circular arc portion transitions to the substantially straight portion. The substantially straight portion of the cutting lands of the second pair extend substantially radially inward toward the longitudinal axis and toward each other from the transition point to the first pair of cutting lands. Ball nose milling cutters are resharpened (reground), when required, before milling operations.

In one known application, a conventional carbide ball nose milling cutter can mill out one pocket of a Titanium super alloy jet engine fan blisk (a blisk being a disk with blades wherein the disk and blades are made from a single piece of material) before the cutter needs to be replaced due to fracturing of the distal end portion of the cutter.

Still, scientists and engineers continue to seek improved milling cutters.

### BRIEF DESCRIPTION OF THE INVENTION

A first expression of an embodiment of the invention is for a milling cutter including a milling-cutter body. The milling-cutter body includes a longitudinal axis, a proximal end portion, and a distal end portion. The distal end portion has a first cutting land, wherein the first cutting land, when viewed in a side elevational view, has an outline including a first substantially circular arc portion, a first substantially straight portion, a first transition zone where the first substantially circular arc portion transitions to the first substantially straight portion, and a distal tip. The distal tip is located substantially on the longitudinal axis. The first substantially straight portion extends proximally from the distal tip to the first transition zone at an acute angle with respect to the longitudinal axis.

### BRIEF DESCRIPTION OF THE DRAWINGS

The accompanying drawings illustrate an embodiment of the invention, provided by way of example only, wherein:
Figure 1 is a schematic perspective view of an embodiment of a milling cutter including a proximal end portion and a distal end portion;
Figure 2 is a front head-on view of the distal end portion of figure 1 showing four cutting lands separated by flutes;
Figure 3 is a side elevational view of the distal end portion of figure 1 wherein the first and third cutting lands are shown in side elevation;
Figure 4 is a side elevational view of the distal end portion of figure 1 wherein the second and fourth cutting lands are shown in side elevation; and
Figure 5 is a front head-on view of an alternate embodiment of the distal end portion of a milling-cutter body showing three cutting lands separated by flutes.

### DETAILED DESCRIPTION OF THE INVENTION

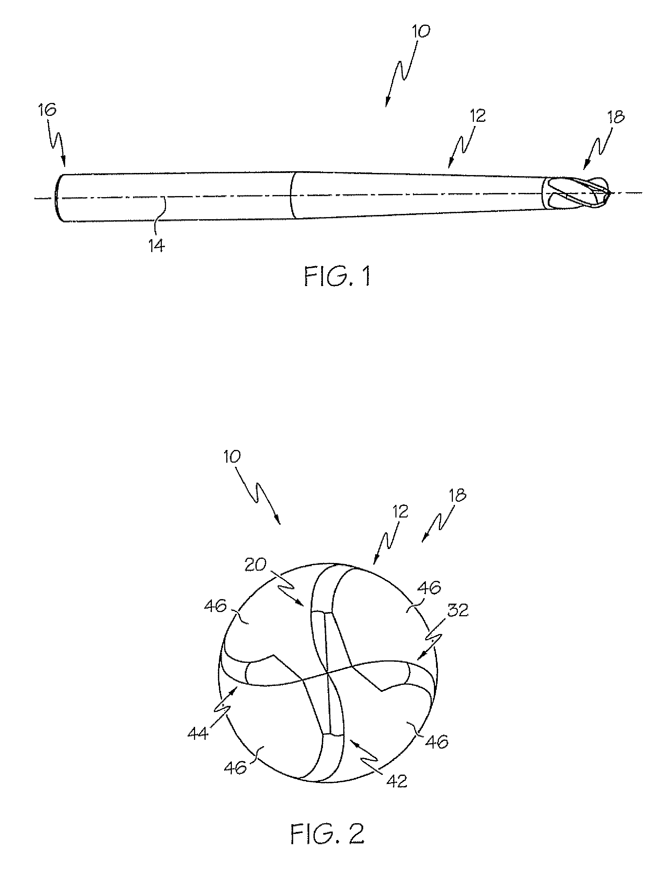

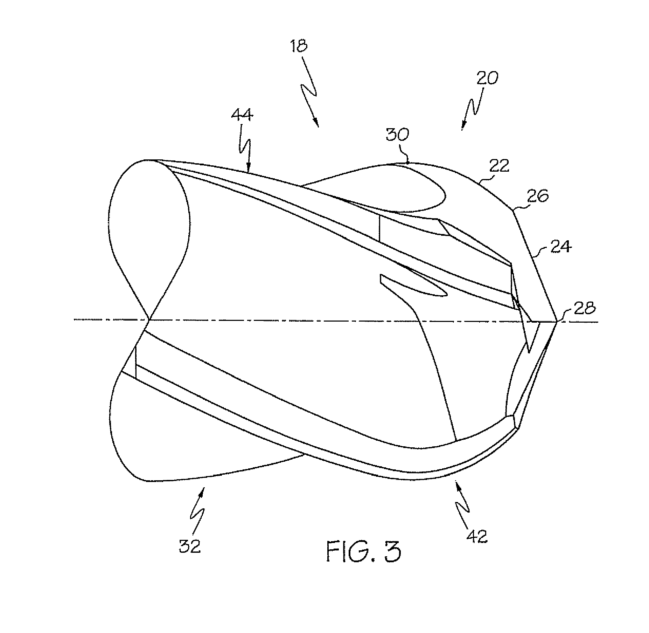

Referring now to the drawings, figures 1-4 disclose an embodiment of the invention. A first expression of the embodiment of figures 1-4 is for a milling cutter 10 comprising a milling-cutter body 12. The milling-cutter body 12 includes a longitudinal axis 14, a proximal end portion 16 , and a distal end portion 18. The distal end portion 18 has a first cutting land 20, wherein the first cutting land 20, when viewed in a side elevational view (see figure 3), has an outline including a first substantially circular arc portion 22, a first substantially straight portion 24, a first transition zone 26 where the first substantially circular arc portion 22 transitions to the first substantially straight portion 24, and a distal tip 28. The distal tip 28 is located substantially on the longitudinal axis 14. The first substantially straight portion 24 extends proximally from the distal tip 28 to the first transition zone 26 at an acute angle with respect to the longitudinal axis 14. In one example, the first transition zone 26 is a point.

In one enablement of the first expression of the embodiment of figures 1-4, the proximal end portion 16 is adapted for application of a torque about the longitudinal axis 14. In one variation, the torque is applied by a rotary-driven tool holder of a machining center. In another variation, the torque is applied by a rotary-driven chuck of a milling machine. In one construction, the acute angle is an angle having a range from forty degrees to eighty degrees, and in one example the acute angle is substantially sixty degrees.

In one implementation of the first expression of the embodiment of figures 1-4, the first substantially circular arc portion 22 has a first tangent point 30, wherein a tangent to the first substantially circular arc portion 22 at the first tangent point 30 is substantially parallel to the longitudinal axis 14. In one variation, the first cutting land 20 longitudinally from the first tangent point 30 to the distal tip 28 is adapted for milling. In one modification, the first cutting land 20 longitudinally from the first tangent point 30 to the first transition zone 26 is adapted for finer milling and wherein the first cutting land 20 longitudinally from the first transition zone 26 to the distal tip 28 is adapted for coarser milling. In one example, the first substantially circular arc portion 22 from the first tangent point 30 to the first transition zone 26 subtends an angle of substantially forty-five degrees. In one illustration, a geometric extension of the first substantially circular arc portion 22 from the first transition zone 26 to the longitudinal axis 14 intersects the longitudinal axis 14 proximate the distal tip 28. The term "proximate" includes "at". In one arrangement, the acute angle is substantially seventy degrees.

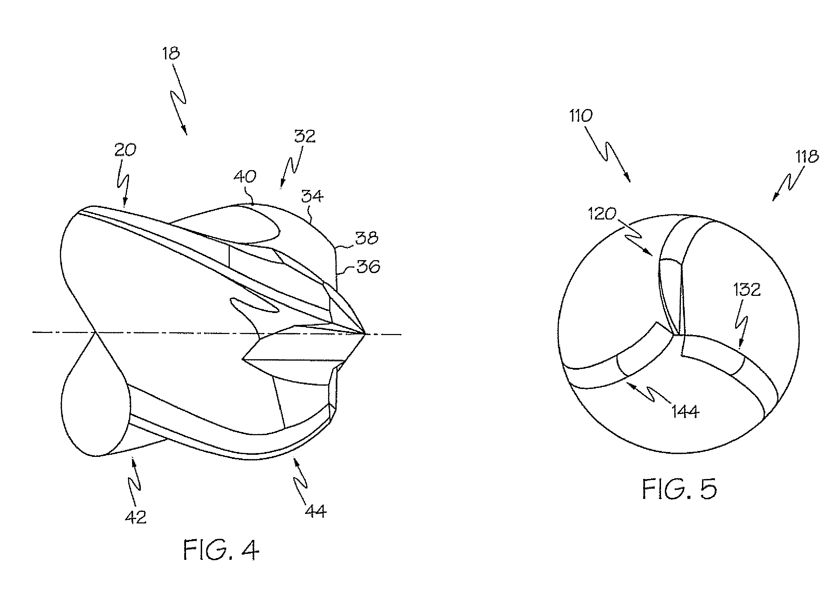

In one application of the first expression of the embodiment of figures 1-4, the distal end portion 18 includes a second cutting land 32, wherein the second cutting land 32, when viewed in a side elevational view (see figure 4), has an outline including a second substantially circular arc portion 34, a second substantially straight portion 36, and a second transition zone 38 where the second substantially circular arc portion 34 transitions to the second substantially straight portion 36. The second substantially straight portion 36 extends substantially radially inward toward the longitudinal axis 14 from the second transition zone 38 to the first cutting land 20 before the distal tip 28. In one example, the second transition zone 38 is a point. In another example, not shown, the second transition zone is itself a short straight line (not shown) extending from the second substantially circular arc portion to the second substantially straight portion.

In one employment of the first expression of the embodiment of figures 1-4, the second substantially circular arc portion 34 has a second tangent point 40, wherein a tangent to the second substantially circular arc portion 34 at the second tangent point 40 is substantially parallel to the longitudinal axis 14, and wherein a plane perpendicular to the longitudinal axis 14 and passing through the first tangent point 30 also passes through the second tangent point 40. In one variation, the second cutting land 32 longitudinally from the second tangent point 40 to the second transition zone 38 is adapted for milling (such as finer milling). In one example, the second substantially circular arc portion 34 from the second tangent point 40 to the second transition zone 38 subtends an angle of substantially forty-five degrees. In one illustration, a geometric extension of the second substantially circular arc portion 34 from the second transition zone 40 to the longitudinal axis 14 intersects the longitudinal axis proximate the distal tip 28.

A second expression of the embodiment of figures 1-4 is for a milling cutter 10 comprising a milling-cutter body 12. The milling-cutter body 12 includes a longitudinal axis 14, a proximal end portion 16 , and a distal end portion 18. The distal end portion 18 has an even number plurality of cutting lands 20, 32, 42 and 44 separated by intervening flutes 46. The cutting lands 20, 32, 42 and 44 include a first cutting land 20, wherein the first cutting land 20, when viewed in a side elevational view (see figure 3), has an outline including a first substantially circular arc portion 22, a first substantially straight portion 24, a first transition zone 26 where the first substantially circular arc portion 22 transitions to the first substantially straight portion 24, and a distal tip 28. The distal tip 28 is located substantially on the longitudinal axis 14. The first substantially straight portion 24 extends proximally from the distal tip 28 to the first transition zone 26 at an acute angle with respect to the longitudinal axis 14. The cutting lands 20, 32, 42 and 44 include an additional cutting land 42 substantially identical to, and substantially diametrically opposed from, the first cutting land 20.

In one application of the second expression of the embodiment of figures 1-4, the cutting lands 20, 32, 42 and 44 include a second cutting land 32, wherein the second cutting land 32, when viewed in a side elevational view (see figure 4), has an outline including a second substantially circular arc portion 34, a second substantially straight portion 36, and a second transition zone 38 where the second substantially circular arc portion 34 transitions to the second substantially straight portion 36. The second substantially straight portion 36 extends substantially radially inward toward the longitudinal axis 14 from the second transition zone 38 to one of the other cutting lands 20, 42 and 44, other than the second cutting land 32, before the distal tip 28. Every cutting land 44, other than the first and the additional cutting land 20 and 42, is substantially identical to the second cutting land 32. In one enablement, the proximal end portion 16 is adapted for application of a torque about the longitudinal axis 14, and the acute angle is an angle having a range from forty degrees to eighty degrees. In one example the acute angle is substantially sixty degrees.

A third expression of the embodiment of figures 1-4 is for a milling cutter 110 and is identical to the previously described second expression, and application and enablement thereof, with the exception, as shown in the alternate embodiment of figure 5, that the distal end portion 118 has an odd number plurality of cutting lands 120, 132 and 144, wherein every cutting land 144 other than the first cutting land 120 is identical to the second cutting land 132.

In one deployment of the embodiment of figures 1-4, the milling-cutter body 12 consisted essentially of grade C2 carbide and was used in a machining center to mill out two pockets of a Titanium-17 super alloy jet engine fan blisk before the cutter needed to be replaced. The milling-cutter 10 was resharpened (reground) when required before needing to be replaced. In comparison, a grade C2 carbide conventional ball nose milling cutter, which was resharpened (reground) when required, fractured the center of its distal end portion and needed to be replaced after being used to mill out only one pocket of a Titanium-17 super alloy jet engine fan blisk. Applicants contemplate using the milling cutter 10 on other super alloys such as Titanium 6-4. The choice of other materials for the milling cutter 10, the choice of other materials for the work piece to be milled by the milling cutter 10, and the choice of the shape, orientation and dimensions of various surfaces (e.g., clearance surfaces, relief surfaces, etc.) of the distal end portion 18 to create the flutes 46 for particular milling operations are within the level of skill of the artisan.

In one construction, the milling cutter 10 was manufactured by grinding a conventional ball nose milling cutter. When the geometric extension of the circular arc portions 22 and 24 of the milling cutter 10 intersect the longitudinal axis 14 at the distal end of the conventional ball nose milling cutter from which the milling cutter 10 was ground, the computer program which previously controlled the motion of the larger number of the conventional ball nose milling cutters to mill a work piece to create a desired product (such as a jet engine fan blisk) can be used to have a smaller number of the milling cutters 10 mill the same work piece to create the same desired product. Other methods of construction, including machining a solid cylindrical blank to create the milling cutter, are left to those skilled in the art.

While the present invention has been illustrated by a description of several embodiments, it is not the intention of the applicants to restrict or limit the spirit and scope of the appended claims to such detail. Numerous other variations, changes, and substitutions will occur to those skilled in the art without departing from the scope of the invention.

## Claims

1. A milling cutter (10) comprising a milling-cutter body (12) including a longitudinal axis (14), a proximal end portion (16), and a distal end portion (18), wherein the distal end portion has a first cutting land (20), wherein the first cutting land, when viewed in a side elevational view, has an outline including a first substantially circular arc portion (22), a first substantially straight portion (24), a first transition zone (26) where the first substantially circular arc portion transitions to the first substantially straight portion, and a distal tip (28), wherein the distal tip is disposed substantially on the longitudinal axis, and wherein the first substantially straight portion extends proximally from the distal tip to the first transition zone at an acute angle with respect to the longitudinal axis.

2. The milling cutter of claim 1, wherein the proximal end portion is adapted for application of a torque about the longitudinal axis, and wherein the acute angle is an angle having a range from forty degrees to eighty degrees.

3. The milling cutter of claim 1 or claim 2, wherein the first substantially circular arc portion has a first tangent point (30), wherein a tangent to the first substantially circular arc portion at the first tangent point is substantially parallel to the longitudinal axis.

4. The milling cutter of claim 3, wherein the first cutting land longitudinally from the first tangent point to the distal tip is adapted for milling.

5. The milling cutter of claim 4, wherein the first cutting land longitudinally from the first tangent point to the first transition zone is adapted for finer milling and wherein the first cutting land longitudinally from the first transition zone to the distal tip is adapted for coarser milling.

6. The milling cutter of any one of claims 3 to 5, wherein the first substantially circular arc portion from the first tangent point to the first transition zone subtends an angle of substantially forty-five degrees.

7. The milling cutter of any one of the preceding claims, wherein a geometric extension of the first substantially circular arc portion from the first transition zone to the longitudinal axis intersects the longitudinal axis proximate the distal tip.

8. The milling cutter of any one of claims 3 to 7, wherein the first substantially circular arc portion from the first tangent point to the first transition zone subtends an angle of substantially forty-five degrees.

9. The milling cutter of any one of preceding claims, wherein a geometric extension of the first substantially circular arc portion from the first transition zone to the longitudinal axis intersects the longitudinal axis proximate the distal tip.

10. The milling cutter of claim 1, the distal end portion includes a second cutting land (32), wherein the second cutting land, when viewed in a side elevational view, has an outline including a second substantially circular arc portion (34), a second substantially straight portion (36), and a second transition zone (38) where the second substantially circular arc portion transitions to the second substantially straight portion, wherein the second substantially straight portion extends substantially radially inward toward the longitudinal axis from the second transition zone to the first cutting land before the distal tip.
